# EUROPEAN PATENT APPLICATION

(11) **EP 2 017 449 A1**
(43) Date of publication of application: **21.01.2009**
(21) Application number: 07110418.6
(22) Date of filing: 15.06.2007
(51) Int. Cl.: F02D 9/10, F16K 1/22

(54) **A rotating shaft assembly**

(71) Applicant: Delphi Technologies, Inc., Troy, MI 48007 (US)
(72) Inventor: Leonard, Thomas, L-4950, Luxembourg (LU)
(74) Representative: Jones, Keith William

(57) **Abstract**

The invention relates to rotating shafts, e.g. a flap shaft in a throttle valve assembly. The rotating shaft assembly (1) provided comprises a body (8), a resilient member (5) having an end (7) fixed to the body (8), a part (6) that is rotatable relative to the fixed end (7) and at least one member (not shown) attached to the rotatable part (6). In use, a rotational force applied to the assembly (1) for the purpose of moving the member, e.g. a valve flap, from a first position produces a return force in the resilient member (5). The return force opposes said rotational force and urges the at least one member towards the first position on release of the rotational force.

## Description

The present invention relates to assemblies including rotating shafts requiring a spring effect and in particular, but not exclusively, to assemblies including rotating shafts requiring a spring effect to return the shaft to an original position, such as, for example, the flap shaft of a throttle body.

Rotating shafts requiring a spring effect to return the shaft to an original position are found in many mechanical applications and, in particular, valve assemblies. A typical valve assembly requiring such a shaft arrangement is a throttle valve assembly used in an automotive application.

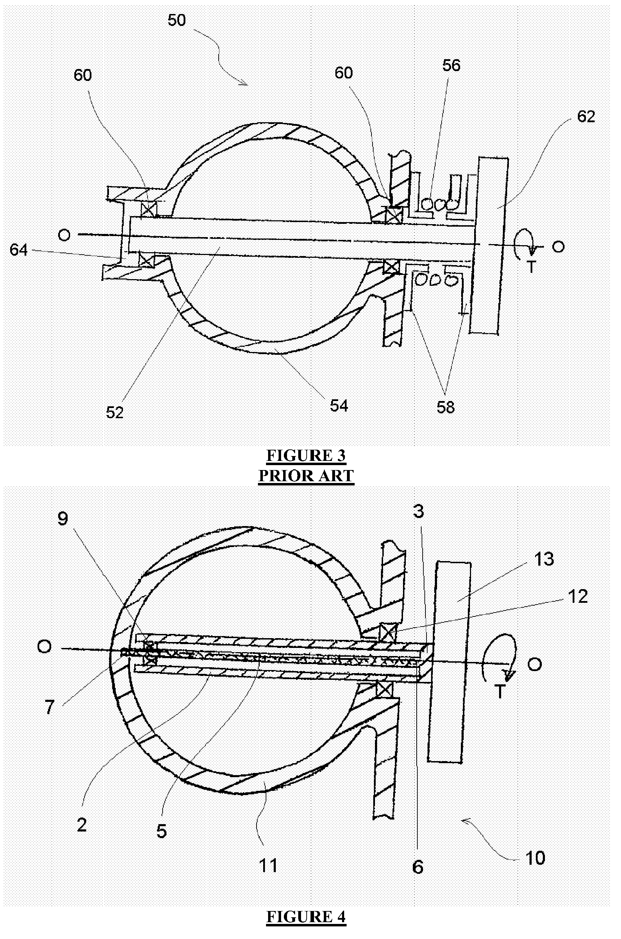

A known automotive throttle valve assembly (50) is shown in Figure 3 of the accompanying drawings. A flap shaft (52) is located in a housing (54) and rotatably mounted in bearings (60). The flap shaft (52) is rotated about its axis (0-0), between valve open and valve closed positions, by a motor (not shown) coupled to the flap shaft (52) *via* a drive gear (62). Typically, a flap (not shown) is mounted on the flap shaft (52) adapted to interface with the housing (54) to open and close the valve accordingly. In case of motor failure, a torsion coil spring (56) provides a return force to return the flap shaft (52) to a safe, default, valve position. Typically, this default valve position is open but maybe closed. The coil spring (56) is typically attached at one end to the housing (54) and coupled to the valve shaft (52) at its other end to allow the return force to be stored in the torsion spring (56) when the flap shaft (52) is rotated by the motor. Typically, the torsion spring (56) is mounted between spring bushings (58) to contain and guide the coil spring (56). In addition, a plug (64) is used to prevent excessive leakage through the bearing (60) and exiting the valve assembly (50).

The spring (56), spring bushings (58), bearings (60) and plug (64) all amount to additional components in the valve assembly (50). As a result, the overall size of the valve assembly (50) is affected and manufacturing complexity and material costs are increased.

Such assemblies are of course not limited to throttle assemblies and may be included in many applications comprising a rotating shaft requiring a spring effect.

According to one aspect of the present invention, there is provided an assembly comprising:
- a body;
- a resilient member having an end fixed to the body;
- a part that is rotatable relative to the fixed end;
- at least one member attached to the rotatable part;
wherein, in use, a rotational force applied to the assembly for the purpose of moving the member, produces a return force in the resilient member, the return force opposing said rotational force.

In many assemblies, where a rotating shaft requires a return force to help return it to an original position, a separate spring component is located externally of the shaft, the spring providing the return force. Advantageously, the return force, according to the present invention, is provided by the resilient member itself, which functions as a spring, eliminating the need for additional components, such as a spring, and hence reducing the overall cost, size and weight of the assembly.

Preferably, the at least one member is attached to the rotatable part by an intermediate component.

Further preferably, the rotational force is applied via the intermediate component. The rotational force may be applied by a user or, more suitably, by a driving means such as a motor, directly or indirectly, coupled to the intermediate component.

Preferably, the intermediate member is mounted in means adapted to facilitate rotation of the at least one member.

Preferably, the intermediate component comprises a hollow member.

Further preferably, the resilient member is disposed substantially within the hollow member. Disposing the resilient member within the hollow member advantageously provides for efficient packaging and minimises the overall size of the assembly.

Suitably, the resilient member and hollow member may have coaxial axes of rotation, advantageously allowing the resilient member and hollow member to rotate about the same axis.

Suitably, the hollow member may comprise a closed end and an open end. The rotatable part of the resilient member may be connected to the closed end of the hollow member and the fixed end of the resilient member may extend beyond the open end of the hollow member.

The hollow member may be substantially cylindrical.

Preferably, the hollow member is rotatably mounted in at least one bearing.

Mounting the hollow member in at least one bearing advantageously provides support to the closed end of the hollow member, especially when the distance between the closed and open ends of the hollow member is large enough to cause deflection at the closed end, if unsupported.

The resilient member may be a shaft. The shaft may be solid or hollow. Alternatively, the resilient member maybe a coil spring or comprise a plurality of filaments, e.g. a cable. The shaft may be substantially circular in cross section but may be any suitable cross section, e.g. square or crucifix.

The shaft maybe mounted in at least one bearing located within the hollow member.

A bearing helps to minimise friction during rotation of the hollow member and shaft, which in turn helps to keep noise and heat, during use, to a minimum.

Preferably, the resilient member and hollow member are a metallic material. Preferably, the material resists corrosion and is resilient to high temperatures, especially in an automotive application. Suitably, the metallic material may be steel.

A valve assembly is also provided, comprising:
- a housing having at least one inlet and at least one outlet between which a fluid may flow; and
- an assembly as described above, wherein the at least one member is an at least one valve member moveable from one open position to another position.

The fluid may comprise a liquid or gas or a combination of gases, e.g. air.

The valve assembly may be a throttle valve in either a static or dynamic application such as a motor vehicle engine.

The present invention will now be described, by way of example only, with reference to the accompanying drawings, in which:
Figure 1 is a schematic which illustrates the principle of the present invention;
Figure 2 shows cross-sectional representations of different embodiments of the shaft in accordance with an embodiment of the present invention;
Figure 3 is a sectional representation through a prior art throttle valve assembly; and
Figure 4 is a sectional representation through a throttle valve assembly comprising an embodiment of the present invention.

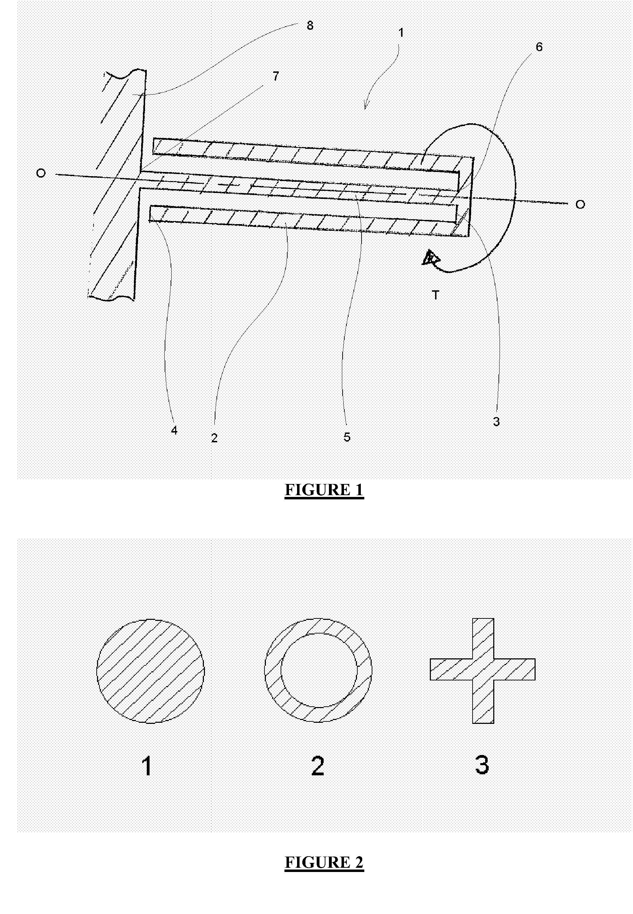

As illustrated in Figure 1, an assembly part (1) comprises a hollow member (2), embodied as a hollow cylinder, having a closed end (3) and an opposing open end (4) and a resilient member (5), embodied as a shaft of circular cross section being disposed within the hollow cylinder (2).
The shaft (5) and the hollow cylinder have coaxial axes of rotation allowing the shaft (5) and hollow cylinder (2) to rotate about the same axis. The shaft (5) is fixed at a one end (6) to the internal face of the closed end (3) of the hollow cylinder and its opposing end (7) extends beyond the open end (4) of the hollow cylinder (2) and is fixed to a support (8).

The principle of the present invention will now be described with reference to Figure 1. The hollow cylinder (2) is rotated about its longitudinal axis (0-0) in either direction by applying a rotational force at the closed end (3). The rotation of the hollow cylinder (2) subjects the shaft (5) to a torque (T) which is resisted due to the fixed end (6) of the shaft (5) and the torque is stored in the shaft (5) as a reaction torque. The reaction torque provides a return force urging the shaft (5), and the hollow cylinder (2), to its original position. When the rotation is released, the return force in the shaft (5) returns the hollow cylinder (2) to its original position.

At least one member (not shown) may be mounted on to the hollow cylinder (2) which may be moved between first and second positions when a rotational force is applied to the hollow cylinder (2) and which is also returned to an original position when the rotation is released.

The at least one member (not shown) may be any component which requires movement between a first and second position and a return force to return it to the first position in the event that the force producing the rotation is removed. The at least one member may be a gear or a valve member, for example.

As illustrated in Figure 2, the shaft is not limited to a circular cross section (1) and may have different shapes of cross section, depending on the torsional stiffness requirements of the shaft, including cylindrical (2) and crucifix (3) cross sections. A number of other cross sections may be suitable.

The at least one member may be at least one flap in a flap valve where the hollow cylinder (2) is the flap shaft on to which the at least one flap is mounted, for example. In this example, the first and second positions may be valve closed and valve open positions respectively and the at least one flap is returned towards the valve closed position on release of the rotational force; the shaft (5) providing the return force. Alternatively, the at least one flap maybe returned towards the valve open position on release of the rotational force.

A throttle valve arrangement (10) comprising such an embodiment, according to the present invention, is illustrated in Figure 4. A flap shaft assembly comprises a hollow cylinder (2) enclosing a shaft (5) and one or more valve members (not shown) mounted on the hollow cylinder (2) which interface with a housing (11) to open and close the throttle valve. Preferably, the at least one valve member comprises at least one flap (not shown) arranged to contact with the housing (11) when in the valve closed position and substantially reduce or stop the flow of a fluid between an inlet and outlet (not shown). The housing (11) may suitably include a valve seat (not shown) for the at least one valve member to abut against when in the valve closed position to provide an effective seal.

The shaft (5) is fixed rigidly at one end (fixed end) (7) to the housing (11). Suitable joining techniques may be used to attach the fixed end (7) of the shaft (5) to the housing (11), including welding, brazing or mechanical means.

The other end (rotatable end) (6) of the shaft (5) is fixed to the closed end (3) of the hollow cylinder (2). The hollow cylinder (2) is free to rotate about its longitudinal axis (0-0), the axis being shared by the shaft (5) which is disposed within.

Mounting the valve member to the hollow cylinder (2), rather than to the shaft (5), reduces the amount of twist to which the valve member is subject. If the valve member were mounted to the shaft (5), the valve member would twist according to the amount of twist per unit length of the shaft (5). The amount of twist would increase with increased distance from the fixed end (7) of the shaft (5). Mounting the valve member on a hollow member (2), within which the shaft (5) is disposed, ensures the valve member is subject to minimal or negligible twisting.

A small bearing (9) may be required between the shaft (5) and the hollow cylinder (2). A larger bearing (12) is also provided between the hollow cylinder (2) and the housing (11). The bearings (9, 12) allow the hollow cylinder (2) to rotate about the shaft (5). A motor (not shown) and drive gear (13) may be suitably coupled to the closed end (3) of the hollow cylinder (2) to open and close the flap valve. Preferably, the angle of rotation between valve open and closed positions is 90 degrees or less.

In the event of failure of the motor or other suitable driving means, the return force provided by the shaft (5) will return the hollow cylinder (2), and a valve member mounted on the hollow cylinder (2), to a safe default position. The default position may be open or closed depending on requirements.

The present invention, as described above, eliminates the need for a torsional coil spring (5), spring bushings (6) and a plug (7) (as referenced in Figure 3), and the assembly may be reduced in size and complexity. Additionally, the material required will accordingly be reduced, importantly saving cost.

These advantages may also be achieved in similar applications other than throttle valve assemblies, which comprise a rotating shaft requiring a return force to return the shaft to an original position.

## Claims

1. A rotating shaft assembly comprising:
- a body;
- a resilient member having an end fixed to the body;
- a part that is rotatable relative to the fixed end;
- at least one member attached to the rotatable part;
wherein, in use, a rotational force is applied to the rotatable part thereby moving the at least one member, which rotational force produces a return force in the resilient member, the return force opposing said rotational force.

2. The rotating shaft assembly according to claim 1, wherein the at least one member is attached to the rotatable part by an intermediate component.

3. The rotating shaft assembly according to claim 2, wherein the rotational force is applied via the intermediate component.

4. The rotating shaft assembly according to claim 3, wherein the intermediate member is mounted in means adapted to facilitate rotation of the at least one member.

5. The rotating shaft assembly according to any one of claims 2 to 4, wherein the intermediate component comprises a hollow member.

6. The rotating shaft assembly according to claim 5, wherein the resilient member is disposed substantially within the hollow member.

7. The rotating shaft assembly according to claims 5 or 6, wherein the resilient member and hollow member are concentric.

8. The rotating shaft assembly according to any one of claims 5 to 7, wherein the hollow member comprises a closed end and an open end, the rotatable part of the resilient member being connected to the closed end of the hollow member and the fixed end of the resilient member extending beyond the open end of the hollow member.

9. The rotating shaft assembly according to any one of claims 5 to 8, wherein the hollow member is substantially cylindrical.

10. The rotating shaft assembly according to claim 9, wherein the hollow member is rotatably mounted in at least one bearing.

11. The rotating shaft assembly according to any preceding claim, wherein the resilient member is a shaft.

12. The rotating shaft assembly according to claim 11, wherein the shaft is substantially circular in cross section and is mounted in at least one bearing located within the hollow member.

13. The rotating shaft assembly according to any preceding claim, wherein the resilient member is a metallic material.

14. A valve assembly comprising:
- a housing having at least one inlet and at least one outlet between which a fluid may flow; and
- a rotating shaft assembly according to any one of claims 1 to 13,
wherein the at least one member is an at least one valve member moveable from one open position to another position.

15. The valve assembly according to claim 14, wherein the fluid comprises a gas.

## Amended claims

### Amended claims in accordance with Rule 137(2) EPC.

**1.** A rotating shaft assembly comprising:
- a body 11;
- a resilient member 5 having an end 7 fixed to the body 11;
- a part 3 that is rotatable relative to the fixed end 7; and
- at least one member attached to the rotatable part 3 by an intermediate component 2 comprising a hollow member 2 within which the resilient member 5 is disposed;
wherein the resilient member 5 is a shaft of circular cross section mounted in at least one bearing 9 located within the hollow member 2, and a rotational force is applied to the rotatable part 3, in use, thereby moving the at least one member, which rotational force produces a return force in the resilient member 5 , the return force opposing said rotational force.

**2.** The rotating shaft assembly according to claim 2, wherein the rotational force is applied *via* the intermediate component 2.

**3.** The rotating shaft assembly according to claim 3, wherein the intermediate member 2 is mounted in means 12 adapted to facilitate rotation of the at least one member.

**4.** The rotating shaft assembly according to claims 5 or 6, wherein the resilient member 5 and hollow member 2 are concentric.

**5.** The rotating shaft assembly according to any one of claims 5 to 7,
wherein the hollow member 2 comprises a closed end and an open end, the rotatable part 3 of the resilient member 5 being connected to the closed end of the hollow member and the fixed end 7 of the resilient member 5 extending beyond the open end of the hollow member 2.

**6.** The rotating shaft assembly according to any one of claims 5 to 8,
wherein the hollow member 2 is substantially cylindrical.

**7.** The rotating shaft assembly according to claim 9, wherein the hollow member 2 is rotatably mounted in at least one bearing 12.

**8.** The rotating shaft assembly according to any preceding claim,
wherein the resilient member 5 is a metallic material.

**9.** A valve assembly 10 comprising:
- a housing 11 having at least one inlet and at least one outlet between which a fluid may flow; and
- a rotating shaft assembly according to any one of claims 1 to 13,
wherein the at least one member is an at least one valve member moveable from one open position to another position.

**10.** The valve assembly 10 according to claim 14, wherein the fluid comprises a gas.
